(19) **Europäisches Patentamt**
**European Patent Office**
**Office européen des brevets**

(11) **EP 1 897 253 B1**

(12) **EUROPÄISCHE PATENTSCHRIFT**

(45) Veröffentlichungstag und Bekanntmachung des Hinweises auf die Patenterteilung:
**08.09.2010 Patentblatt 2010/36**

(21) Anmeldenummer: **06753240.8**

(22) Anmeldetag: **03.06.2006**

(51) Int Cl.:
**H04B 10/17** (2006.01)

(86) Internationale Anmeldenummer:
**PCT/DE2006/000965**

(87) Internationale Veröffentlichungsnummer:
**WO 2006/136130 (28.12.2006 Gazette 2006/52)**

(54) **VERFAHREN ZUR RAMANVERSTÄRKUNG VON OPTISCHEN SIGNALEN UND ÜBERTRAGUNGSSYSTEM**

METHOD FOR THE RAMAN AMPLIFICATION OF OPTICAL SIGNALS AND TRANSMISSION SYSTEM

PROCEDE D'AMPLIFICATION RAMAN DE SIGNAUX OPTIQUES ET SYSTEME DE TRANSMISSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.06.2005 DE 102005028357**

(43) Veröffentlichungstag der Anmeldung:
**12.03.2008 Patentblatt 2008/11**

(73) Patentinhaber: **Deutsche Telekom AG**
**53113 Bonn (DE)**

(72) Erfinder:
• **GUNKEL, Matthias**
**64291 Darmstadt (DE)**
• **LEPPLA, Ralph**
**64285 Darmstadt (DE)**
• **SCHNEIDERS, Malte**
**64289 Darmstadt (DE)**
• **VORBECK, Sascha**
**64347 Griesheim (DE)**
• **WEIERSHAUSEN, Werner**
**64859 Eppertshausen (DE)**
• **BOUSONVILLE, Michael**
**55118 Mainz (DE)**

(56) Entgegenhaltungen:
**EP-A- 1 278 315       US-A1- 2002 191 277**
**US-A1- 2003 133 179**

**Beschreibung**

Gebiet der Erfindung

Die Erfindung betrifft im Allgemeinen ein Verfahren zur Ramanverstärkung von optischen Signalen sowie ein Übertragungssystem und im Besonderen ein WDM-Übertragungssystem mit Ramanverstärkung.

Hintergrund der Erfindung

Die optische Signalübertragung hält seit vielen Jahren in nahezu alle Bereiche der Datenübertragung Einzug. Hierfür werden die Signale typischerweise über optische Fasern, z.B. Glasfasern geleitet. Eine der wesentlichen zu beachtenden Schwierigkeiten ist die Signaldämpfung bei der Übertragung über lange Strecken. Um der Signaldämpfung entgegenzuwirken, werden typischerweise Verstärker in die Übertragungsstrecke.eingebaut.

Die derzeit am häufigsten eingesetzten Verstärker sind Erbium-dotierte Faserverstärker, sogenannte EDFA (Erbium doped fiber amplifier). Ein EDFA ist ein Verstärker bestehend aus einem mit Erbium dotierten Glasfaserabschnitt mit einer typischen Länge von einigen Metern. Der dotierte Glasfaserabschnitt verhält sich im Grunde wie eine Laserdiode und wird durch Pumpen mit einer Wellenlänge von 980 nm bzw. 1480 nm gepumpt.

Seit kurzem ist noch an ein anderes Verstärkungsverfahren Gegenstand der Entwicklung, nämlich die sogenannte Raman-Verstärkung, basierend auf dem quantenmechanischen Raman-Effekt. Bei der Ramanverstärkung wird typischerweise ein Pumplaser in die Übertragungsfaser, also eine gewöhnliche Glasfaser, eingekoppelt um eine stimulierte Ramanstreuung innerhalb der Glasfaser hervorzurufen.

Diese aktiven optischen Ramanverstärker weisen einige technische Vorteile im Vergleich zu den EDFA auf. Diese umfassen zumindest Folgendes:

Das Eigenrauschen eines Ramanverstärkers ist deutlich geringer als das eines EDFA. Dadurch kann eine höhere Übertragungsreichweite der Kommunikationssysteme erzielt oder ein größerer Verstärkerabstand realisiert werden, was die Beschaffungs- und Betriebskosten senken kann.

Der Verstärkungsbereich kann durch die Einstellung der Pumpwellenlänge in einem großen Bereich weitgehend frei gewählt werden. Im Gegensatz dazu ist das Verstärkungsverhalten eines EDFA eine inhärente feste Eigenschaft der Erbium-Ionen.

EDFA werden nach einem Ausfall lichtundurchlässig, was zu einem Totalausfall der gesamten Übertragungsstrecke führen kann. Ramanverstärker hingegen verlieren zwar ihre verstärkenden Eigenschaften, bleiben aber transparent, so dass die Übertragungsstrecke zwar mit reduzierter Verstärkung arbeitet, aber zumindest weiter durchlässig bleibt.

Ferner fügen Ramanverstärker vergleichsweise wenig Polarisationsmodendispersion (PMD) in die Übertragungsstrecke ein, was besonders bei zukünftigen WDM-Systemen mit einer Datenrate von 40 Gbit/s ein großer Vorteil gegenüber EDFA ist.

Aus der US 2002/0191277 A1 ist ein Verfahren zur Verstärkung eines optischen Signals bekannt, wobei die Raman-Verstärkung mit Halbleiter-basierter Verstärkung kombiniert wird.

Nichtsdestotrotz sind auch Verfahren zur Ramanverstärkung weiter verbesserungswürdig.

Allgemeine Beschreibung der Erfindung

Die Erfinder haben daher zunächst folgende Überlegungen zur Ramanverstärkung von optischen Signalen angestellt.

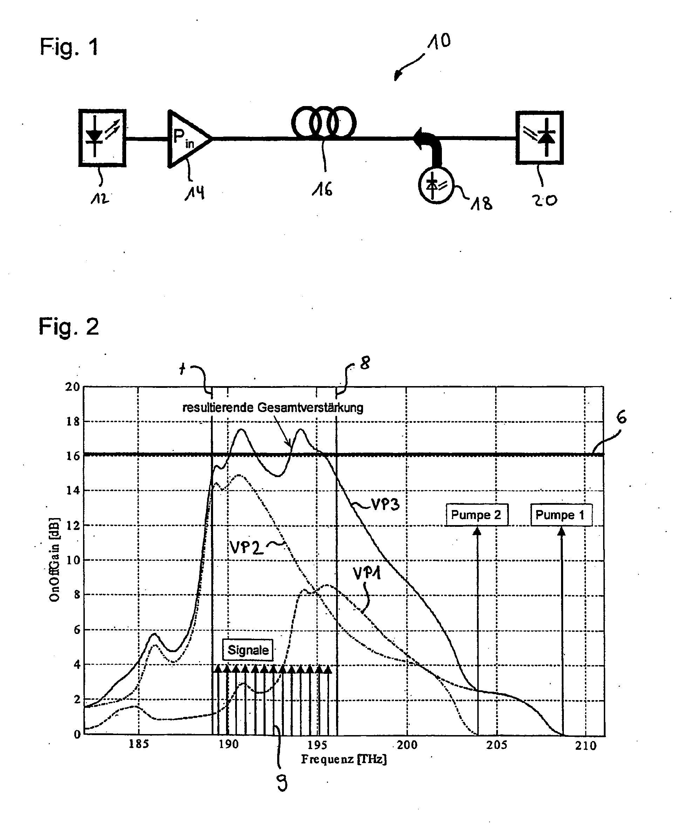

Ramanverstärker wurden bislang typischerweise auf ein möglichst glattes Verstärkungsprofil hin entworfen, d.h. die Signalverstärkung sollte in einer bestimmten Bandbreite, in der Signale übertragen werden, möglichst frequenzunabhängig sein. Da das Verstärkungsspektrum einer Ramanpumpe stark frequenzabhängig ist, werden zum Teil die Verstärkungsspektren mehrerer Ramanpumpen kombiniert. Es werden folglich zwei oder mehrere Ramanpumpen eingesetzt, die auf unterschiedlichen, sinnvoll zu wählenden Emissionsfrequenzen eine ebenfalls sinnvoll zu wählende optische Pumpleistung emittieren (siehe auch Fig. 1). So kann die Welligkeit der Verstärkung mit wachsender Anzahl von Ramanpumpen zunehmend verringert werden.

Bei der WDM-Signalübertragung (Wavelength Division Multiplex) mit optischer Verstärkung wird die Übetragungsreichweite durch das Rauschen begrenzt. Eine wesentliche Komponente des Rauschens ist das sogenannte ASE-Rauschen (Aplified Spontaneous Emission / Verstärkte Spontane Emission). Das ASE-Rauschen steigt zwar mit der Verstärkung an, allerdings weniger als proportional. Daher sinkt der durch das ASE-Rauschen verursachte Anteil an der Rauschzahl mit höherer Verstärkung.

Es ist nun wünschenswert, die Rauschzahl zu reduzieren. Hierzu ist es jedoch nicht möglich, einfach die Verstärkung sehr hoch zu wählen, da bei hoher Verstärkung noch ein anderer Störeffekt - die sogenannte Rayleigh-Streuung - berücksichtigt werden muss. Die Rayleigh-Streuung dominiert ab einem gewissen Punkt und steigt dann mit der Verstärkung stark an, was die Rauscheigenschaften des Ramanverstärkers verschlechtern würde. Folglich existiert ein Minimum für die Rauschzahl bei einer bestimmten Verstärkung. In diesem Rauschzahlminimum über der Verstärkung macht das ASE-Rauschen des größten Anteil am Gesamtrauschen aus.

Ferner ist bei Ramanverstärkern die Rauschzahl frequenzabhängig. Herkömmlicher Weise werden die Ramanpumpen derart eingestellt, dass in diesem Minimum der Rauschzahl über der Verstärkung operiert wird und die Verstärkung eine möglichst geringe Frequenzabhängigkeit im Übertragungsband aufweist. Bei dieser Einstellung ist die Rauschzahl für Signale, die auf einer Frequenzskala näher an den Pumpfrequenzen liegen, schlechter als für weiter entfernt liegende Signale. Außerdem weist die Rauschzahl über der Frequenz eine Welligkeit auf, die invers zur Verstärkungswelligkeit verläuft.

Daher ist es derzeit das übliche und nach Kenntnis der Erfinder einzig bekannte Verfahren, die Ramanverstärkung so einzustellen, dass dieses Minimum der Rauschzahl über der Verstärkung bei spektral maximaler Verstärkung innerhalb des Übertragungsbandes erreicht wird, um gleichzeitig eine möglichst geringe Rauschzahl und eine möglichst frequenzunabhängige Verstärkung zu erzielen.

Obwohl diese bekannten Verfahren mit dieser Extremalbetrachtung an eine scheinbar unüberwindliche Grenze gestoßen sind, besteht dennoch das Bedürfnis die Rauschzahl weiter zu reduzieren.

Die Erfindung hat sich daher die Aufgabe gestellt, ein Verfahren zur Ramanverstärkung von optischen Signalen bzw. ein optisches Kommunikationssystem mit Ramanverstärkung, bereit zu stellen, welches eine geringe, insbesondere gegenüber den bekannten Verfahren/Systemen reduzierte Rauschzahl aufweist.

Eine weitere Aufgabe der Erfindung ist es, ein derartiges Verfahren bzw. System bereit zu stellen, welches gute, insbesondere gegenüber den bekannten Verfahren/Systemen verbesserte Übertragungseigenschaften gewährleistet.

Noch eine Aufgabe der Erfindung ist es, ein derartiges Verfahren bzw. System bereit zu stellen, welches einfach und kostengünstig auch in vorhandene Systeme integrierbar ist sowie geringe Betriebskosten verursacht und insbesondere den Einsatz von EDFA-Abschnitten vermeidet.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird ein Verfahren zur Ramanverstärkung von optischen Signalen bei der Signalübertragung bereit gestellt, welches sich insbesondere für ein WDM-Übertragungssystem, einschließlich DWDM etc. eignet. Hierbei werden zwischen einem Sender und einem Empfänger optische Signale innerhalb des Signal-Übertragungsbandes über einen optischen Wellenleiter, z.B. eine optische Faser übertragen. Die optischen Signale werden dabei mittels einer oder mehrerer Raman-Pumpen, innerhalb des optischen Wellenleiters ramanverstärkt. Mit anderen Worten findet die Verstärkung innerhalb der gewöhnlichen undotierten Glasfaser statt, so dass im Gegensatz zum EDFA vorzugsweise keine speziell dotierten Verstärkerabschnitte in die Übertragungsstrecke eingesetzt werden müssen. Es ist vielmehr ausreichend, die Raman-Pumpen in die herkömmliche Übertragungs-Glasfaser einzukoppeln.

Erfindungsgemäß wird nun das Verstärkungsprofil der Ramanverstärkung innerhalb des Übertragungsbandes gezielt verzerrt. Diese Verzerrung oder Vorverzerrung wird insbesondere dadurch realisiert, dass das Verstärkungsprofil vorangehoben wird. Hierzu wird eine vorbestimmt vorangehobene Zielvorgabe für das Verstärkungsprofil definiert und durch geeignete Wahl und Einstellung der Raman-Pumpen wird ein Verstärkungsprofil eingestellt, welches dieser vorbestimmt vorangehobenen Zielvorgabe (soweit wie möglich) nahe kommt. Mit anderen Worten wird das Verstärkungsprofil gegenüber einer herkömmlichen frequenzunabhängigen Zielvorgabe des Verstärkungsprofils zunächst mit einer Preemphase (preemphasis) versehen. Anschließend wird das verzerrte oder vorangehobene Verstärkungsprofil wieder entzerrt bzw. abgesenkt, um mittels der, vorzugsweise passiven, Entzerrung die gezielte Verzerrung wieder zu kompensieren.

Dadurch kann überraschender Weise die effektive Rauschzahl im Übertragungsband gegenüber herkömmlichen ramanverstärkten Systemen reduziert werden und dennoch trotz der Preemphase des Verstärkungsprofils der Ramanverstärkung nach der Deemphase ein relativ frequenzunabhängiges Verstärkungsprofil erzielt werden.

Dies hat enorme Qualitäts- bzw. Kostenvorteile zur Folge, da das Signal-zu-Rausch-Verhältnis verbessert werden kann bzw. die Übertragungsstrecken zwischen den Verstärkern länger gewählt werden können.

Demnach existiert für das Übertragungssystem zunächst ein nicht verzerrtes erstes Verstärkungsprofil, welches an die Signalfrequenzen im Übertragungsband angepasst ist, genauer dessen Maximum oder Maxima an die Signalfrequenzen im Übertragungsband angepasst ist bzw. sind. Vorzugsweise liegt bzw. liegen das Maximum bzw. die Maxima dieses nicht verzerrten ersten Verstärkungsprofils innerhalb des Übertragungsbandes.

Ferner existiert in Form des verzerrten Verstärkungsprofils ein zweites Verstärkungsprofil, welches gegenüber dem ersten Verstärkungsprofil vorbestimmt vorangehoben ist. Hierbei sind das erste Verstärkungsprofil an eine konstante Zielvorgabe und das zweite Verstärkungsprofil an eine gegenüber der konstanten Zielvorgabe vorangehobene, insbesondere nicht konstante Zielvorgabe angenähert.

Bevorzugt wird die Verzerrung des zweiten Verstärkungsprofils mittels einer Verschiebung der Pumpfrequenz(en) der Raman-Pumpe(n) gegenüber der Pumpfrequenz(en) bei dem nicht verzerrten ersten Verstärkungsprofil durchgeführt.

Insbesondere wird/werden die Pumpfrequenz(en) der RamanPumpe(n) bei dem verzerrten zweiten Verstärkungsprofil in Bezug auf die Pumpfrequenz(en) bei dem nicht verzerrten ersten Verstärkungsprofil jeweils zu einer höheren Frequenz und/oder weg von dem Übertragungungsband verschoben. Dies bewirkt eine Absenkung der effektiven Rauschzahl.

Besonders bevorzugt wird die Verzerrung des Verstärkungsprofils dergestalt realisiert, dass das Verstärkungsprofil der Ramanverstärkung im oberen Frequenzbereich des Übertragungsbandes vorangehoben wird, so dass das Verstärkungsprofil innerhalb des Übertragungsbandes zu höheren Frequenzen hin durch eine - von lokalen Maxima abgesehen - im Wesentlichen steigende Funktion definiert wird. Weiter bevorzugt ist also die Zielvorgabe (ideale Sollfunktion) für das vorangehobene Verstärkungsprofil eine zu höheren Frequenzen hin innerhalb des Übertragungsbandes, insbesondere stetig, wachsende Funktion.

Dadurch verschiebt sich der Schwerpunkt des Verstärkungsprofils im Übertragungsband nach der Verzerrung oder Preemphase und vor der Entzerrung bzw. Deemphase vom Zentrum zum oberen Rand des Frequenzbereichs des Übertragungsbandes. Eine lineare Näherung des Verstärkungsprofils innerhalb des Übertragungsbandes nach der Verzerrung oder Preemphase und vor der Entzerrung weist somit eine signifikante Steigung über der Frequenz auf.

Diese Verschiebung kann insbesondere soweit gewählt sein, dass das Maximum des Verstärkungsprofils nach der Verzerrung und vor der Entzerrung am Rand des Übertragungsbandes liegt. Eine Verschiebung derart, dass das Maximum des Verstärkungsprofils nach der Verzerrung und vor der Entzerrung außerhalb des Übertragungsbandes liegt, ist zwar ggf. mit erhöhten Kosten verbunden, soll aber nicht ausgeschlossen sein.

Es hat sich als vorteilhaft erwiesen, das Verstärkungsprofil im oberen Frequenzbereich des Übertragungsbandes um mindestens 5 dB, besonders bevorzugt um etwa 8 dB gegenüber dem unteren Frequenzbereich des Übertragungsbandes anzuheben. Dadurch kann eine Reduzierung der effektiven Rauschzahl um etwa 0,7 dB oder mehr bewirkt werden.

Gemäß einer besonders bevorzugten Ausführungsform der Erfindung werden mehrere Raman-Pumpen mit unterschiedlichen Pumpfrequenzen zur Ramanverstärkung eingesetzt, so dass sich die Verstärkungsprofile der mehreren Raman-Pumpen zu einem Gesamtverstärkungsprofil überlagern und das Gesamtverstärkungsprofil der Ramanverstärkung innerhalb des Übertragungsbandes mittels einer Verschiebung der Pumpfrequenz einer oder der Pumpfrequenzen mehrerer der Raman-Pumpen, vorzugsweise aller Raman-Pumpen, in Bezug auf ein nicht verzerrtes, d.h. im Übertragungsband näherungsweise konstantes Gesamtverstärkungsprofil vorangehoben wird.

Insbesondere werden die Verzerrung der aktiven Ramanverstärkung und die passive Entzerrung innerhalb der Glasfaser derart aufeinander angepasst, dass das Verstärkungsmaximum nach der Verzerrung des Verstärkungsprofils und nachfolgender Entzerrung im Übertragungsband liegt und die Verstärkung nach der Entzerrung wieder möglichst konstant ist. Mit anderen Worten ist eine lineare Näherung des Verstärkungsprofils im Übertragungsband wieder zumindest nahezu konstant.

In besonders einfacher Weise kann zur Entzerrung nach der Ramanverstärkung ein optisches Filter verwendet werden, um die Verzerrung zu kompensieren bzw. die Signale invers zu der Verzerrung zu filtern.

Zweckmäßig werden Pumplaser als Raman-Pumpen verwendet. Ferner werden die Pumplaser entgegen der Signalübertragungsrichtung in den Wellenleiter eingekoppelt, um die Ramanverstäkung innerhalb der Glasfaser zu bewirken.

Zur Übertragung über längere Strecken wird die Gesamtstrecke in mehrere Übertragungsstrecken unterteilt und jeweils am Ende jeder Übertragungsstrecke wird mittels einer erfindungsgemäßen Pumpen-Entzerrer-Einheit die verzerrende Verstärkung und die kompensierende Entzerrung durchgeführt. Ferner ist innerhalb der Gesamtstrecke hinter dem Sender ein Eingangsverstärker für die zu übertragenen Signale vorgesehen.

Zum Einrichten des Übertragungssystems kann demnach wie folgt vorgegangen werden:

Zunächst wird ein Sollwert für die Ramanverstärkung, z.B. für die mittlere Verstärkung, innerhalb des Übertragungsbandes festgelegt, welches zu einer oder mehreren ersten Pumpfrequenzen für ein an den Sollwert angepasstes nicht verzerrtes erstes Verstärkungsprofil innerhalb des Übertragungsbandes korreliert. Nachfolgend werden eine bzw. mehrere zweite Pumpfrequenzen für ein gegenüber dem ersten Verstärkungsprofil verzerrtes zweites Verstärkungsprofil bestimmt und eine bzw. mehrere Pumpen mit der zweiten Pumpfrequenz bzw. den zweiten Pumpfrequenzen zur Ramanverstärkung der zu übertragenden Signale bereit gestellt, wobei die zweiten Pumpfrequenzen gegenüber den ersten Pumpfrequenzen verschoben sind. Die Pumpleistungen werden vorzugsweise ebenfalls modifiziert, um das zweite verzerrte Verstärkungsprofil zu erzielen. Ferner werden Mittel zur Entzerrung des verzerrten zweiten Verstärkungsprofils in Bezug auf den Sollwert bereit gestellt.

Im Folgenden wird die Erfindung anhand eines Ausführungsbeispiels und unter Bezugnahme auf die Zeichnungen näher erläutert.

Kurzbeschreibung der Figuren

Es zeigen:

Fig. 1    eine schematische Darstellung eines herkömmlichen Ramanverstärkten Glasfaser-Kommunikationssystems,
Fig. 2    die Superposition zweier Verstärkungsprofile zum einem Gesamtverstärkungsprofil als Funktion der Frequenz,
Fig. 3    einen Ausschnitt des Gesamtverstärkungsprofils aus Fig.2 im Übertragungsband,
Fig. 4    die effektive Rauschzahl im Übertragungsband als Funktion der Frequenz,
Fig. 5    den spontanen Emissionsfaktor E in Abhängigkeit der Frequenzdifferenz zwischen Signal und Pumpe ($\Delta v$),
Fig. 6    zielvorgaben für das Verstärkungsprofil im Übertragungsband als Funktion der Frequenz mit und ohne Preemphase,
Fig. 7    ein Verstärkungsprofil der Ramanverstärkung im Übertragungsband als Funktion der Frequenz nach der Preemphase und vor der Deemphase,
Fig. 8    die effektive Rauschzahl im Übertragungsband als Funktion der Frequenz mit und ohne Preemphase,
Fig. 9    ein Verstärkungsprofil im Übertragungsband als Funktion der Frequenz nach der Preemphase und der Deemphase,
Fig. 10   eine schematische Darstellung eines ramanverstärkten Glasfaser-WDM- Kommunikationssystems gemäß dem Ausführungsbeispiel der Erfindung und
Fig. 11   wie Fig. 10, aber mit mehreren Übertragungsstrecken und Verstärker-Filter- Einheiten.

Detaillierte Beschreibung der Erfindung

Fig. 1 zeigt ein beispielhaftes herkömmliches Übertragungssystem 10 mit Ramanverstärkung. Optische Signale werden von einem Sender 12 von einem Eingangsverstärker 14 vorverstärkt und über eine Glasfaserstrecke 16 von z.B. 80 km Länge übertragen. Am Ende der Übertragungsstrecke 16 werden die optischen Signale mittels Pumplasern 18, ramanverstärkt um nachfolgend von einem Empfänger 20 empfangen zu werden. Das Prinzip der Ramanverstärkung von optischen Signalen in einer Glasfaser ist dem Fachmann grundsätzlich bekannt.

Bezug nehmend auf Fig. 2 wird im Folgenden ein Übertragungssystem mit zwei Pumpen 1 und 2, genauer Pumplasern betrachtet. Jede Pumpe 1, 2 erzeugt jeweils ein Verstärkungsprofil (OnOffGain) VP1 bzw. VP2, welche durch die gestrichelte bzw. die strichpunktierte Linie dargestellt sind. Die beiden Einzelverstärkungen der Ramanpumpen 1 und 2 überlagern sich schließlich zu einem Gesamtverstärkungsprofil VP3, dargestellt durch die durchgezogene Linie.

Das Übertragungsband, d.h. der Bereich, in dem die Signalverstärkung stattfinden soll, liegt in diesem Beispiel zwischen 189,1 und 196,1 THz der relativen Frequenz aufgetragen auf der x-Achse. Es wird eine vorbestimmte mittlere Verstärkung (OnOffGain), in diesem Beispiel von etwa 16,1 dB vorgegeben, welche durch die horizontale Linie 6 dargestellt ist. Die beiden senkrechten Linien 7 und 8 begrenzen das Übertragungsband zwischen 189,1 und 196,1 THz. Die zu verstärkenden Signale sind schematisch als Pfeile 9 dargestellt. Die Pumpfrequenzen der Pumplaser 1, 2 weisen allgemein eine höhere Frequenz als die Signale 9 im Übertragungsband auf (Stokes-Fall). Die Pumpfrequenzen betragen in diesem Beispiel etwa 204 und 209 THz.

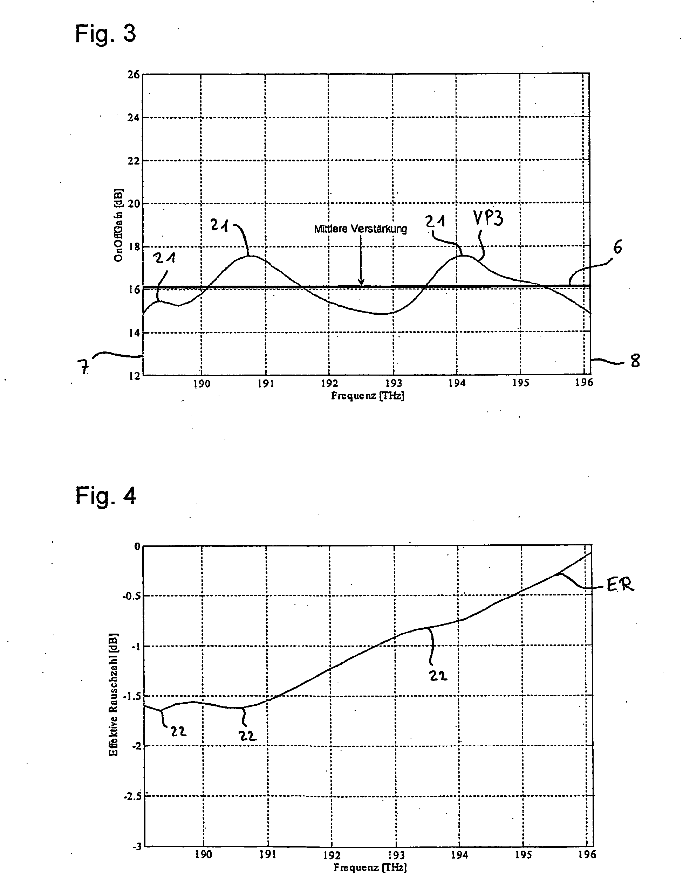

Bezug nehmend auf Fig. 3 ist der für die Signalübertragung wichtige Verstärkungsbereich, nämlich das Übertragungsband vergrößert dargestellt. Das Gesamtverstärkungsprofil ist derart eingestellt, dass die beiden Verstärkungsmaxima innerhalb des Übertragungsbandes bei etwa 190,8 THz und etwa 194,1 THz lokalisiert sind und das Gesamtverstärkungsprofil VP3 innerhalb des gesamten Übertragungsbandes mindestens etwa 15 dB beträgt. Das Gesamtverstärkungsprofil VP3 schwankt innerhalb des Übertragungsbandes um weniger als 2 dB um die Zielvorgabe des mittleren Verstärkungswertes 6 und der Schwerpunkt des Abschnitts des Gesamtverstärkungsprofils VP3 innerhalb des Übertragungsbandes liegt etwa in der Mitte des Übertragungsbandes.

Fig. 4 zeigt die zu dem in den Figuren 2 und 3 dargestellten Gesamtverstärkungsprofil VP3 zugehörige effektive Rauschzahl ER als Funktion der relativen Frequenz. Die effektive Rauschzahl ER drückt aus, wie groß die Rauschzahl eines äquivalenten EDFAs sein müsste, der bei gleicher Verstärkung das gleiche Rauschverhalten aufweist. Diesbezüglich wird auf den Artikel "Raman Amplifiers for Telecommunications", 1. Springer 2003 von Islam, M.N. verwiesen. Der in Fig. 4 dargestellte Verlauf ist typisch, wobei die effektive Rauschzahl ER, wie in diesem Beispiel, per Definition durchaus negativ sein kann.

Ein Vergleich mit Fig. 3 zeigt, dass kleinere Einbrüche an den Stellen großer Verstärkung, entsprechend den lokalen Maxima 21 in Fig. 3, auftreten, welche in Fig. 4 mit 22 bezeichnet sind. Es besteht also eine Korrelation zwischen Verstärkungs- und Rauschprofil. Es ist weiterhin klar zu erkennen, dass die effektive Rauschzahl zu höheren Frequenzen hin oder mit kleiner werdendem Abstand zu den Pumpfrequenzen (in der Fig. 4 rechts) zunimmt. Das Maximum der Rauschzahl in diesem Bereich begrenzt bei herkömmlichen Systemen die Übertragungsreichweite.

Davon ausgehend wurden folgende Überlegungen angestellt: Von dem dominierenden ASE-Rauschen hängt direkt die Rauschzahl gemäß der Definition

$$F = F_{Schrot} + F_{ASE} + F_{Ray} = \frac{1}{G_{OnOff}} + \frac{\rho_{ASE}^+(L)}{h\nu G_{OnOff}} + \frac{P_{Ray}^+(L)}{h\nu B_F G_{OnOff}}. \qquad (1)$$

ab. Das ASE-Rauschen kann demnach folgendermaßen modelliert werden (vgl. "Raman Amplifiers for Telecommunications", 1. Springer 2003 von Islam, M.N):

$$\frac{d\rho_{ASE}^+(z)}{dz} = -\alpha_S \rho_{ASE}^+(z) + \sum_i C_{Ri} P_i(z)(\rho_{ASE}^+(z) + h\nu E_i) + S\alpha_R \rho_{ASE}^-(z) \qquad (2)$$

$$-\frac{d\rho_{ASE}^-(z)}{dz} = -\alpha_S \rho_{ASE}^-(z) + \sum_i C_{Ri} P_i(z)(\rho_{ASE}^-(z) + h\nu E_i) + S\alpha_R \rho_{ASE}^+(z) \qquad (3)$$

$$E = \frac{1}{1 - e^{-\frac{h\Delta\nu}{kT}}} \qquad (4)$$

Hierin sind:

$B_F$      Bandbreite des Empfangsfilters
$C_{Ri}$      Ramanverstärkungskoeffizient (der i-ten Pumpe)
$E$      Spontaner Emissionsfaktor
$F$      Gesamtrauschzahl
$F_{Schrot}$      Rauschzahl verursacht durch Schrot-Rauschen
$F_{ASE}$      Rauschzahl verursacht durch ASE-Rauschen
$F_{Ray}$      Rauschzahl verursacht durch Rayleigh-Rauschen
$G_{OnOff}$      Ramanverstärkung (OnOffGain)
$h$      Planck'sche Konstante
$k$      Bolzmann-Konstante
$P_{i,}$      Leistung (der i-ten Lichtwelle)
$P_{Ray}$      Rayleigh Rauschleistung
$P_{Ray}^+(L)$      Rayleigh Rauschleistung am Empfänger
$S$      Rayleigh-Backscattering Koeffizient
$z$      Position in Längsrichtung der Glasfaser
$\alpha_R$      Faserdämpfung durch Rayleigh-Backscattering
$\alpha_s$      Faserdämpfung
$\Delta\nu$      Frequenzdifferenz zwischen Signal und Pumpe
$\nu$      optische Frequenz

$\rho_{ASE}$       Spektrale Rauschdichte (ASE)

$\rho_{ASE}^{+}(L)$      Spektrale Rauschdichte am Empfänger.

Die hochgestellten Plus- und Minus-Zeichen kennzeichnen die Ausbreitungsrichtung des ASE-Rauschens. Plus bedeutet Ausbreitung in Vorwärts- und Minus in Rückwärtsrichtung. Der Term

$h\nu E_i$

in den Summen gemäß Gleichung (2) und (3) steht für die Größe des erzeugten ASE-Rauschens.

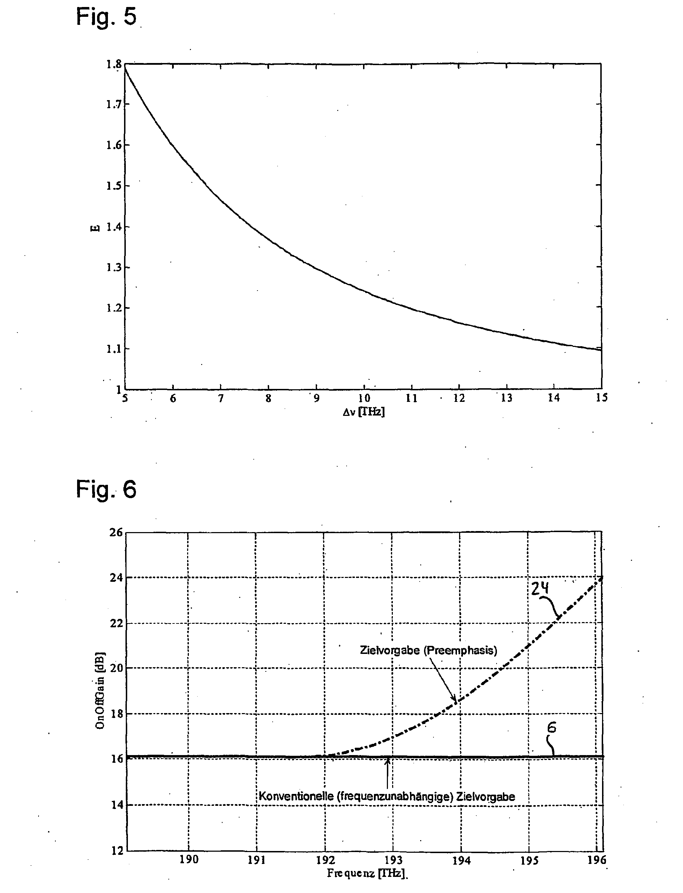

Fig. 5 zeigt den spontanen Emissionsfaktor E als Funktion der Frequenzdifferenz $\Delta\nu$ zwischen Pumpe und Signal gemäß Gleichung (4). Gemäß Gleichung (4) und wie in Fig. 5 anschaulich zu sehen ist, fällt der spontane Emissionsfaktor mit größer werdender Frequenzdifferenz $\Delta\nu$ zwischen Pumpe und Signal ab. Um den spontanen Emissionsfaktor E und damit die ASE-Rausch-Generierung zu minimieren, wird daher vorgeschlagen, die Differenzfrequenz zwischen Pumpe und Signal zu vergrößern.

Dies läuft jedoch dem Ziel einer möglichst konstanten Verstärkungsfunktion zunächst unmittelbar zuwider, da dann das Verstärkungsmaximum nicht mehr im Übertragungsbereich liegt und die Verstärkung stark frequenzabhängig wird. Dies ist jedoch bei den in Rede stehenden Übertragungssystemen, z.B. bei WDM-Übertragungssystemen in der Regel nicht erwünscht. Daher ergibt sich für den Fachmann an dieser Stelle ein unüberwindbgr erscheinendes Hindernis aufgrund der Gegenläufigkeit dieser beiden Zielvorgaben.

Die Erfinder haben nun aber einen Weg gefunden, diesen Widerspruch wie folgt aufzulösen.

Schritt 1: Gezielte Verzerrung

Gemäß der vorliegenden Erfindung werden die Pumpfrequenzen nämlich im Vergleich zu dem in Fig. 2 und 3 dargestellten konventionellen Gesamtverstärkungsprofil weg vom Signal-Übertragungsband in Richtung höherer Emissionsfrequenzen verschoben, um das Rauschzahlmaximum (am rechten Rand in Fig. 4) gezielt zu senken. Die dadurch entstehende, grundsätzlich unerwünschte Verschiebung des Verstärkungsmaximums und die ebenfalls grundsätzlich unerwünschte erhöhte Frequenzabhängigkeit im Übertragungsbereich werden dabei zunächst bewusst in Kauf genommen.

Es wird also in einem ersten Schritt das Ziel einer frequenzunabhängigen Verstärkung zunächst aufgegeben. Im Rahmen der vorliegenden Erfindung ist es vielmehr beabsichtigt, eine höhere Verstärkung auf derjenigen Seite des Übertragungsbandes zu bewirken, neben dem sich die Pumpen befinden, also eine bei höheren Frequenzen vorangehobene Zielvorgabe zu definieren. Fig. 6 zeigt ein Beispiel für eine solche vorangehobene Zielvorgabe 24 (strichpunktierte Linie) für die Ramanverstärkung im Vergleich zu einer konventionellen konstanten Zielvorgabe 6 (durchgezogene Linie). Die vorangehobene Zielvorgabe 24 ist am oberen Ende des Übertragungsbandes, d.h bei höherer Frequenz und in Richtung der Pumpfrequenzen, um etwa 8 dB gegenüber dem unteren Ende, d.h bei niedrigerer Frequenz und weg von den Pumpfrequenzen, bzw. gegenüber der konventionellen konstanten Zielvorgabe 6 angehoben. Die vorangehobene Zielvorgabe 24 ist demnach eine zu höheren Frequenzen hin stetig wachsende Funktion. Diese Voranhebung wird als Preemphase (Preemphasis) bezeichnet.

Dies führt bezogen auf die Erfindung dazu, dass die Pumpfrequenzen und Pumpleistungen anders eingestellt werden müssen, um der vorangehobenen Zielvorgabe oder -funktion 24 nahe zu kommen, als wenn ein frequenzunabhängiges Verstärkungsspektrum der Ramanverstärkung oder eine konstante Zielvorgabe 6 gefordert wird. Da der Gesamtfrequenzgang des Verstärkers eine Superposition der Verstärkungsprofile aller beteiligten Pumpen ist, werden aufgrund der geometrischen Form des Ramanprofils jeder einzelnen Pumpe (in diesem Beispiel Pumpe 1 und 2), die Pumpenfrequenzen weiter vom Signal-Übertragungsband 7, 8 entfernt und deren Leistung auf die neue Zielvorgabe 24 hin angepasst bzw. optimiert.

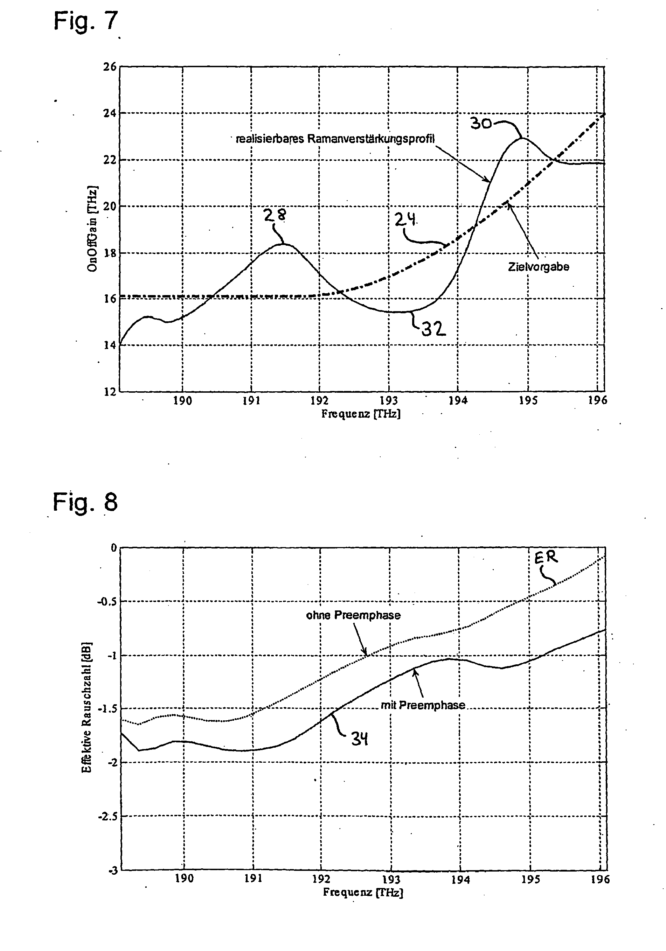

Fig. 7 zeigt das optimierte tatsächliche Verstärkungsprofil 32 unter Berücksichtigung der Preemphase, das heißt das nach der in Fig. 6 dargestellten vorangehobenen Zielvorgabe 24 eingestellt bzw. erfindungsgemäß an diese angenähert ist.

Die Verschiebung der Pumpfrequenzen der beiden Pumpen 1 und 2 weg vom Übertragungsbereich zu höheren Frequenzen (in Fig. 7 nach links) ist erkennbar an der ebenfalls zu höheren Frequenzen hin verschobenen Position der Verstärkungmaxima 28, 30 (vergleiche Fig. 3, dort 21) des vorangehobenen Verstärkungsprofils 32 (durchgezogene Linie in Fig. 7).

Bezug nehmend auf Fig. 8 ist das mit dem erfindungsgemäßen Verfahren erzielte Rauschzahlprofil 34 (durchgezogene Linie) über der Frequenz angegeben. Ferner dargestellt ist das konventionelle Rauschzahlprofil ER (punktierte Linie) ohne die erfindungsgemäße Voranhebung des Verstärkungsprofils. Da die Rauschzahl zum einen von der Verstärkung und zum anderen in stärkerem Maße vom Frequenzabstand zwischen Signal- und Pumplasern abhängig ist ergibt sich eine Absenkung des Rauschzahlprofils 34 gegenüber dem Rauschzahlprofil ER. Es ist bereits in diesem einfachen Beispiel mit lediglich zwei Ramanpumpen 1, 2 eine deutliche Verringerung des Rauschzahlmaximums im Rauschzahlprofil 34 um etwa 0,7 dB gegenüber dem konventionellen Rauschzahlprofil ER im Übertragungsband festzustellen. Wenn mehr Aufwand für die Preemphase verwendet wird, lässt sich nach Einschätzung der Erfinder eine Reduktion um 1 dB oder sogar mehr realisieren. Dies entspricht einer vergrößerten Systemreichweite von etwa 25 %, so dass bei gleicher Performance die Kosten für die Verstärker um ein Viertel verringert werden können.

Schritt 2: Entzerrung

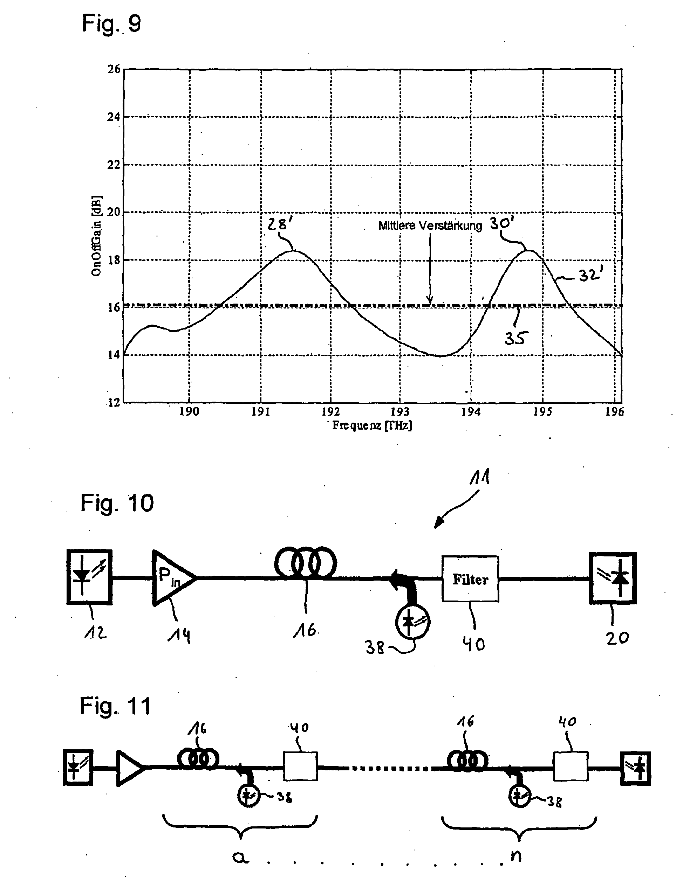

Bis zu diesem Punkt weist das Übertragungssystem noch ein unerwünscht verzerrtes Verstärkungsprofil 32 auf. Dieses wird nun in einem zweiten Schritt wieder entzerrt. Durch die Entzerrung oder Deemphase wird der Einfluss der Preemphase auf den Verstärkungsfrequenzgang - vorzugsweise soweit wie möglich - wieder kompensiert. Fig. 9 zeigt das resultierende Verstärkungsprofil 32' nach der Verzerrung und nachfolgender Entzerrung.

Somit ist der Frequenzgang im Übertragungsbereich unter den gegebenen Randbedingungen wieder möglichst konstant bzw. ist einer konstanten mittleren Verstärkung 35 angenähert und schwankt um diese. Demgemäß liegen auch die Verstärkungsmaxima 28', 30' wieder im Übertragungsbereich, während jedoch die reduzierte Rauschzahl gemäß Bezugsziffer 34 in Fig. 8 erhalten bleibt.

Fig. 10 zeigt den prinzipiellen Aufbau eines ramanverstärkten WDM-Systems 11 gemäß der vorliegenden Erfindung, also mit frequenzverschobenen Ramanpumpen und einem Deemphase-Filter 40 zur Rauschzahlverbesserung. Optische Signale werden von dem Sender 12 emittiert und von einem Eingangsverstärker 14 vorverstärkt. Anschließend werden die Signale über die Glasfaserstrecke 16 übertragen. Am Ende der Übertragungsstrecke 16 werden die optischen Signale mittels zwei frequenzverschobenen Pumplasern, welche in der Fig. 10 gemeinsam mittels des Symbols 38 dargestellt sind, ramanverstärkt. Die mehreren Pumplaser 38 werden hierzu entgegen der Übertragungsrichtung in die konventionelle Glasfaserstrecke 16 eingekoppelt. Direkt hinter den Pumplasern 38 ist der Entzerrer oder Deemphase-Filter 40 angeordnet. Der Deemphase-Filter 40 ist in einfacher Weise als optischer Filter, d.h. als passives Bauelement ausgebildet. Anschließend können die Signale von dem Empfänger 20 empfangen werden.

Alternativ können mehrere Glasfaserstrecken 16 und Verstärker-Filter-Einheiten 38, 40 hintereinander geschaltet werden, wie in Fig. 11 mit den Klammern a bis n dargestellt ist.

Es ist dem Fachmann ersichtlich, dass die vorstehend beschriebenen Ausführungsformen beispielhaft zu verstehen sind.

**Patentansprüche**

**1.** Verfahren zur Ramanverstärkung von optischen Signalen (9) in einem optischen Übertragungssystem (11), insbesondere einem WDM-Übertragungssystem, wobei
zwischen einem Sender (12) und einem Empfänger (20) optische Signale (9) innerhalb eines Übertragungsbandes (7, 8) über einen optischen Wellenleiter (16) übertragen werden,
die optischen Signale (9) mittels zumindest einer Pumpe (38) ramanverstärkt werden,
**dadurch gekennzeichnet, dass**
das Verstärkungsprofil der Ramanverstärkung innerhalb des Übertragungsbandes (7, 8) gegenüber einem nicht verzerrten Verstärkungsprofil (VP3) vorangehoben wird, so dass das vorangehobene Verstärkungsprofil (32) einer vorbestimmt vorangehobenen Zielvorgabe (24) nahe kommt (preemphase) und **dadurch** dass
das vorangehobene Verstärkungsprofil (32) entzerrt wird, derart dass die Voranhebung des vorangehobenen Verstärkungsprofil (32) wieder kompensiert wird (deemphase).

**2.** Verfahren nach Anspruch 1, wobei
die Voranhebung des vorangehobenen Verstärkungsprofils (32) mittels einer Verschiebung der Pumpfrequenz der Pumpe (38) gegenüber der Pumpfrequenz bei dem nicht verzerrten Verstärkungsprofil (VP3) durchgeführt wird.

**3.** Verfahren nach Anspruch 2, wobei
die Pumpfrequenz der Pumpe (38) bei dem vorangehobenen Verstärkungsprofil (32) in Bezug auf die Pumpfrequenz bei dem nicht verzerrten Verstärkungsprofil (VP3) zu einer höheren Frequenz oder weg vom Übertragungungsband (7, 8) verschoben wird.

**4.** Verfahren nach einem der vorstehenden Ansprüche, wobei
das Verstärkungsprofil im oberen Frequenzbereich des Übertragungsbandes (7, 8) vorangehoben wird.

**5.** Verfahren nach einem der vorstehenden Ansprüche, wobei
der Schwerpunkt des Verstärkungsprofils im Übertragungsband (7, 8) nach der Voranhebung und vor der Entzerrung am oberen Rand des Frequenzbereichs des Übertragungsbandes liegt.

**6.** Verfahren nach einem der vorstehenden Ansprüche, wobei
das Maximum des Verstärkungsprofils nach der Voranhebung und vor der Entzerrung am Rand oder außerhalb des Übertragungsbandes (7, 8) liegt.

**7.** Verfahren nach einem der vorstehenden Ansprüche, wobei
das Verstärkungsprofil im oberen Frequenzbereich des Übertragungsbandes um mindestens 5dB (10dB) gegenüber dem unteren Frequenzbereich des Übertragungsbandes (7, 8) angehoben wird.

**8.** Verfahren nach einem der vorstehenden Ansprüche, wobei
mehrere Pumpen (38, Pumpe 1, Pumpe 2) mit unterschiedlichen Pumpfrequenzen zur Ramanverstärkung verwendet werden, und wobei
sich die Verstärkungsprofile der mehreren Pumpen (38, Pumpe 1, Pumpe 2) zu einem Gesamtverstärkungsprofil überlagern und das Gesamtverstärkungsprofil der Ramanverstärkung innerhalb des Übertragungsbandes mittels einer Verschiebung der Pumpfrequenz einer oder der Pumpfrequenzen mehrerer der Pumpen in Bezug auf ein nicht verzerrtes Gesamtverstärkungsprofil (VP3) vorangehoben wird.

**9.** Verfahren nach einem der vorstehenden Ansprüche, wobei
die Voranhebung und die Entzerrung derart aufeinander angepasst sind, dass das Verstärkungsmaximum nach der Voranhebung des Verstärkungsprofils und nachfolgender Entzerrung im Übertragungsband (7, 8) liegt.

**10.** Verfahren nach einem der vorstehenden Ansprüche, wobei
die optischen Signale (9) vor der Ramanverstärkung mittels eines Eingangsverstärkers (14) verstärkt werden.

**11.** Verfahren nach einem der vorstehenden Ansprüche, wobei
die Entzerrung mittels eines optischen Filters (40) nach der Ramanverstärkung durchgeführt wird.

**12.** Verfahren nach einem der vorstehenden Ansprüche, wobei
Laser als Pumpen (38, Pumpe 1, Pumpe 2) verwendet werden und die Laser entgegen der Signalübertragungsrichtung in den Wellenleiter (16) eingekoppelt werden.

**13.** Verfahren nach einem der vorstehenden Ansprüche, wobei
das Übertragungssystem (11) mehrere Übertragungsstrecken (16) umfasst und jeweils am Ende jeder Übertragungsstrecke (16) mittels einer Pumpen-Entzerrer-Einheit (38, 40) die vorangehobene Verstärkung und die kompensierende Entzerrung durchgeführt werden.

**14.** Optisches Kommunikationssystem (11) mit Ramanverstärkung, insbesondere WDM-Kommunikationssystem, umfassend
einen Sender (12), einen Empfänger (20) und einen optischen Wellenleiter (16), welcher den Empfänger (12) und den Sender (20) miteinander verbindet, derart dass optische Signale (9) innerhalb eines Übertragungsbandes (7, 8) zwischen dem Sender (12) und dem Empfänger (20) über den Wellenleiter (16) übertragbar sind,
zumindest eine Ramanpumpe (38) mit einer vorbestimmten Pumpfrequenz an dem Wellenleiter (16) zur Ramanverstärkung der optischen Signale (9), **dadurch gekennzeichnet, dass**
die vorbestimmte Pumpfrequenz derart ausgewählt ist, dass das Verstärkungsprofil der Ramanverstärkung innerhalb des Übertragungsbandes (7, 8) gegenüber einem nicht verzerrten Verstärkungsprofil (VP3) vorangehoben ist, so dass das vorangehobene Verstärkungsprofil (32) einer vorbestimmt vorangehobenen Zielvorgabe (24) nahe kommt (preemphase)
und **dadurch** dass
Mittel zur Entzerrung (40) des vorangehobenen Verstärkungsprofils (32) umfasst sind, welche das vorangehobene Verstärkungsprofil (32) entzerren, derart dass die Voranhebung des vorangehobenen Verstärkungsprofil (32) wieder kompensiert wird (deemphase).

**15.** Kommunikationssystem (11) nach Anspruch 14, wobei
das erste Verstärkungsprofil (VP3) durch zumindest eine erste Pumpfrequenz definiert ist und die vorbestimmte Pumpfrequenz der Pumpe (38) eine zweite Pumpfrequenz ist und die zweite Pumpfrequenz gegenüber der ersten Pumpfrequenz verschoben ist, um die Voranhebung des Verstärkungsprofils zu bewirken.

**16.** Kommunikationssystem (11) nach Anspruch 15, wobei
die zweite Pumpfrequenz der Pumpe bei dem vorangehobenen Verstärkungsprofil im Vergleich zu der ersten Pumpfrequenz bei dem nicht verzerrten Verstärkungsprofil zu einer höheren Frequenz oder weg vom Übertragungsband verschoben ist.

17. Kommunikationssystem (11) nach einem der vorstehenden Ansprüche, wobei das vorangehobene Verstärkungsprofil im oberen Frequenzbereich des Übertragungsbandes (7, 8) vorangehoben ist.

18. Kommunikationssystem (11) nach einem der vorstehenden Ansprüche, wobei der Schwerpunkt des Verstärkungsprofils im Übertragungsband nach der Voranhebung und vor der Entzerrung am oberen Rand des Frequenzbereichs des Übertragungsbandes (7, 8) liegt.

19. Kommunikationssystem (11) nach einem der vorstehenden Ansprüche, wobei das Maximum des Verstärkungsprofils nach der Voranhebung und vor der Entzerrung am Rand oder außerhalb des Übertragungsbandes (7, 8) liegt.

20. Kommunikationssystem (11) nach einem der vorstehenden Ansprüche, wobei das Verstärkungsprofil im oberen Frequenzbereich des Übertragungsbands (7, 8) um mindestens 5 dB gegenüber dem unteren Frequenzbereich des Übertragungsbands angehoben ist.

21. Kommunikationssystem (11) nach einem der vorstehenden Ansprüche, wobei mehrere Pumpen (38) mit unterschiedlichen Pumpfrequenzen zur Ramanverstärkung umfasst sind, und wobei die Verstärkungsprofile der mehreren Pumpen (38) zu einem Gesamtverstärkungsprofil überlagert sind und das Gesamtverstärkungsprofil der Ramanverstärkung innerhalb des Übertragungsbandes (7, 8) mittels einer Verschiebung der Pumpfrequenz einer der Pumpen (38) oder der Pumpfrequenzen mehrerer der Pumpen (38) in Bezug auf ein nicht verzerrtes Gesamtverstärkungsprofil (VP3) vorangehoben ist.

22. Kommunikationssystem (11) nach einem der vorstehenden Ansprüche, wobei ein Eingangsverstärker (14) vor dem Wellenleiter (16) umfasst ist.

23. Kommunikationssystem (11) nach einem der vorstehenden Ansprüche, wobei das Mittel zur Entzerrung (40) des vorangehobenen Verstärkungsprofils ein optisches Filter umfasst, welcher die Voranhebung des vorangehobenen Verstärkungsprofils (32) zumindest teilweise kompensiert.

24. Kommunikationssystem (11) nach einem der vorstehenden Ansprüche, wobei das vorangehobene Verstärkungsprofil (32) und die Mittel zur Entzerrung des vorangehobenen Verstärkungsprofil (32) derart aufeinander angepasst sind, dass das Verstärkungsmaximum nach der Voranhebung des Verstärkungsprofils und nachfolgender Entzerrung im Übertragungsband (7, 8) liegt.

25. Kommunikationssystem (11) nach einem der vorstehenden Ansprüche, wobei die Pumpen (38) Laser umfassen und die Laser entgegen der Signalübertragungsrichtung in den Wellenleiter (16) eingekoppelt sind.

26. Kommunikationssystem (11) nach einem der vorstehenden Ansprüche, umfassend mehrere Übertragungsstrecken (16), wobei jeweils am Ende jeder Übertragungsstrecke (16) eine Pumpen-Entzerrer-Einheit (38, 40) vorhanden ist, wobei jede Pumpen-Entzerrer-Einheit (38, 40) jeweils eine Pumpe (38) zur vorangehobenen Verstärkung und jeweils ein Mittel zur kompensierenden Entzerrung (40) aufweist.

27. Verfahren zur Einrichtung eines WDM-Übertragungssystems (11) mit Ramanverstärkung, bei welchem zwischen einem Sender (12) und einem Empfänger (20) optische Signale (9) innerhalb eines Übertragungsbandes (7, 8) über einen optischen Wellenleiter (16) übertragbar sind, wobei eine Zielvorgabe (6) für eine mittlere Verstärkung der Ramanverstärkung innerhalb des Übertragungsbandes (7, 8) festgelegt wird, wobei die Zielvorgabe (6) zu einer oder mehreren ersten Pumpfrequenzen korreliert ist und mittels der einen oder der mehreren ersten Pumpfrequenzen ein nicht verzerrtes Verstärkungsprofil (VP3) definiert ist, **gekennzeichnet durch** die Schritte:

Bestimmen einer bzw. mehrerer zweiter Pumpfrequenzen für ein gegenüber dem nicht verzerrten Verstärkungsprofil (VP3) vorangehobenes Verstärkungsprofil (32),
Bereitstellen einer oder mehrerer Pumpen (38) mit der zweiten Pumpfrequenz bzw. den zweiten Pumpfrequenzen zur Ramanverstärkung der zu übertragenden Signale (9),
Bereitstellen von Mitteln zur Entzerrung (40) des vorangehobenen Verstärkungsprofils (32), um ein entzerrtes Verstärkungsprofil (32') zu erzeugen, mittels welchem das Übertragungssystem (11) nachfolgend betrieben wird.

**Claims**

1. Method for Raman amplification of optical signals (9) in an optical transmission system (11), in particular a WDM transmission system, wherein

optical signals (9) are transmitted within a transmission band (7, 8) through an optical waveguide (16) between a transmitter (12) and a receiver (20),

the optical signals (9) are Raman amplified by means of at least one pump (38),

**characterized in that**

the amplification profile of the Raman amplification within the transmission band (7, 8) is preemphasized with respect to an undistorted amplification profile (VP3), so that the preemphasized amplification profile (32) approaches a predetermined, preemphasized target value (24) (preemphasis), and **in that**

the preemphasized amplification profile (32) is equalized in such a manner that the preemphasis of the preemphasized amplification profile (32) is compensated again (deemphasis).

2. Method according to claim 1, wherein

the preemphasis of the preemphasized amplification profile (32) is carried out by means of a shifting of the pump frequency of the pump (38) with respect to the pump frequency in the undistorted amplification profile (VP3).

3. Method according to claim 2, wherein

the pump frequency of the pump (38) in the preemphasized amplification profile (32) is shifted with respect to the pump frequency in the undistorted amplification profile (VP3) to a higher frequency or away from the transmission band (7, 8).

4. Method according to any one of the preceding claims, wherein

the amplification profile is preemphasized in the upper frequency range of the transmission band (7, 8).

5. Method according to any one of the preceding claims, wherein

the centroid of the amplification profile in the transmission band (7, 8) lies at the upper edge of the frequency range of the transmission band after preemphasis and before equalization.

6. Method according to any one of the preceding claims, wherein

the maximum of the amplification profile lies at the edge of, or outside of, the transmission band (7, 8) after preemphasis and before equalization.

7. Method according to any one of the preceding claims, wherein

the amplification profile is preemphasized by at least 5 dB (10 dB) in the upper frequency range of the transmission band as compared to the lower frequency range of the transmission band (7, 8).

8. Method according to any one of the preceding claims, wherein

multiple pumps (38, pump 1, pump 2) are used with different pump frequencies for Raman amplification, and wherein the amplification profiles of the multiple pumps (38, pump 1, pump 2) superimpose to form an overall amplification profile, and the overall amplification profile of the Raman amplification within the transmission band is preemphasized with respect to an undistorted overall amplification profile (VP3) by means of a shifting of the pump frequency of one pump or the pump frequencies of multiple pumps.

9. Method according to any one of the preceding claims, wherein

the preemphasis and equalization are matched to one another in such a manner that the amplification peak lies in the transmission band (7, 8) after preemphasis of the amplification profile and subsequent equalization. ,

10. Method according to any one of the preceding claims, wherein

the optical signals (9) are amplified by means of an input amplifier (14) prior to the Raman amplification.

11. Method according to any one of the preceding claims, wherein
the equalization is carried out by means of an optical filter (40) after the Raman amplification.

12. Method according to any one of the preceding claims, wherein
lasers are used as pumps (38, pump 1, pump 2) and the lasers are coupled into the waveguide (16) opposite the direction of signal transmission.

13. Method according to any one of the preceding claims, wherein
the transmission system (11) includes multiple transmission paths (16) and the preemphasized amplification and compensating equalization are carried out at the end of each transmission path (16) by means of a pump/equalizer unit (38, 40).

14. Optical communications system (11) with Raman amplification, in particular a WDM transmission system, including a transmitter (12), a receiver (20), and an optical waveguide (16) which connects the transmitter (12) and receiver (20) to one another in such a manner that optical signals (9) can be transmitted within a transmission band (7, 8) through the optical waveguide (16) between the transmitter (12) and the receiver (20),
at least one Raman pump (38) with a predetermined pump frequency at the waveguide (16) for Raman amplification of the optical signals (9), **characterized in that**
the predetermined pump frequency is selected such that the amplification profile of the Raman amplification within the transmission band (7, 8) is preemphasized with respect to an undistorted amplification profile (VP3), so that the preemphasized amplification profile (32) approaches a predetermined, preemphasized target value (24) (preemphasis),
and **in that**
means for equalization (40) of the preemphasized amplification profile (32) are included which equalize the preemphasized amplification profile (32) such that the preemphasis of the preemphasized amplification profile (32) is compensated again (deemphasis).

15. Communications system (11) according to claim 14, wherein
the first amplification profile (VP3) is defined by at least one first pump frequency and the predetermined pump frequency of the pump (38) is a second pump frequency, and the second pump frequency is shifted with respect to the first pump frequency in order to accomplish the preemphasis of the amplification profile.

16. Communications system (11) according to claim 15, wherein
the second pump frequency of the pump in the preemphasized amplification profile is shifted to a higher frequency or away from the transmission band in comparison to the first pump frequency in the undistorted amplification profile.

17. Communications system (11) according to any one of the preceding claims, wherein
the preemphasized amplification profile in the upper frequency range of the transmission band (7, 8) is preemphasized.

18. Communications system (11) according to any one of the preceding claims, wherein
the centroid of the amplification profile in the transmission band lies at the upper edge of the frequency range of the transmission band (7, 8) after preemphasis and before equalization.

19. Communications system (11) according to any one of the preceding claims, wherein
the maximum of the amplification profile lies at the edge of, or outside of, the transmission band (7, 8) after preemphasis and before equalization.

20. Communications system (11) according to any one of the preceding claims, wherein
the amplification profile is preemphasized by at least 5 dB in the upper frequency range of the transmission band (7, 8) as compared to the lower frequency range of the transmission band.

21. Communications system (11) according to any one of the preceding claims, wherein
multiple pumps (38) with different pump frequencies for Raman amplification are included, and wherein
the amplification profiles of the multiple pumps (38) are superimposed to form an overall amplification profile, and the overall amplification profile of the Raman amplification within the transmission band (7, 8) is preemphasized with respect to an undistorted overall amplification profile (VP3) by means of a shifting of the pump frequency of one of the pumps (38) or of the pump frequencies of multiple pumps (38).

**22.** Communications system (11) according to any one of the preceding claims, wherein an input amplifier (14) is included ahead of the waveguide (16).

**23.** Communications system (11) according to any one of the preceding claims, wherein the means for equalization (40) of the preemphasized amplification profile include an optical filter, which at least partly compensates the preemphasis of the preemphasized amplification profile (32).

**24.** Communications system (11) according to any one of the preceding claims, wherein the preemphasized amplification profile (32) and the means for equalization of the preemphasized amplification profile (32) are matched to one another in such a manner that the amplification peak lies in the transmission band (7, 8) after preemphasis of the amplification profile and subsequent equalization.

**25.** Communications system (11) according to any one of the preceding claims, wherein the pumps (38) include lasers and the lasers are coupled into the waveguide (16) opposite the direction of signal transmission.

**26.** Communications system (11) according to any one of the preceding claims, including multiple transmission paths (16), wherein one pump/equalizer unit (38, 40) is present at the end of each transmission path (16), wherein each pump/equalizer unit (38, 40) has one pump (38) for preemphasized amplification and has one means for compensating equalization (40).

**27.** Method for equipping a WDM transmission system (11) with Raman amplification, in which optical signals (9) can be transmitted within a transmission band (7, 8) through an optical waveguide (16) between a transmitter (12) and a receiver (20),
wherein a target value (6) for an average amplification of the Raman amplification within the transmission band (7, 8) is specified, wherein the target value (6) is correlated to one or more first pump frequencies and an undistorted amplification profile (VP3) is defined by means of the one or more first pump frequencies,
**characterized by** the steps:
determination of one or more second pump frequencies for a preemphasized amplification profile (32) with respect to the undistorted amplification profile (VP3),
provision of one or more pumps (38) with the second pump frequency or the second pump frequencies for Raman amplification of the signals (9) to be transmitted,
provision of means for equalization (40) of the preemphasized amplification profile (32) in order to produce an equalized amplification profile (32') by means of which the transmission system (11) is operated accordingly.

**Revendications**

**1.** Procédé d'amplification Raman de signaux optiques (9) dans un système de transmission optique (11), notamment dans un système de transmission WDM,
des signaux optiques (9) étant transmis, entre un émetteur (12) et un récepteur (20), à l'intérieur d'une bande de transmission (7, 8) par l'intermédiaire d'un guide d'onde optique (16),
les signaux optiques (9) étant amplifiés par diffusion Raman au moyen d'au moins une pompe (38),
**caractérisé en ce que**
le profil de gain de l'amplification Raman à l'intérieur de la bande transmission (7, 8) est pré-accentué par rapport à un profil de gain non affecté de distorsion (VP3) de manière que le profil de gain pré-accentué (32) se rapproche d'une consigne (24) pré-accentuée de manière prédéterminée (pré-emphase) et **en ce que**
le profil de gain pré-accentué (32) est égalisé de manière à compenser à nouveau la pré-accentuation du profil de gain pré-accentué (32) (dé-emphase).

**2.** Procédé selon la revendication 1,
la pré-accentuation du profil de gain pré-accentué (32) s'effectuant au moyen d'un décalage de la fréquence de pompage de la pompe (38) par rapport à la fréquence de pompage pour le profil de gain sans distorsion (VP3).

**3.** Procédé selon la revendication 2,
la fréquence de pompage de la pompe (38) pour le profil de gain pré-accentué (32) étant décalée, par rapport à la fréquence de pompage pour le profil de gain sans distorsion (VP3), vers une fréquence plus haute ou en l'éloignant de la bande de transmission (7, 8).

4. Procédé selon l'une des revendications précédentes, le profil de gain étant pré-accentué dans la gamme des hautes fréquences de la bande de transmission (7, 8).

5. Procédé selon l'une des revendications précédentes, lé centre de gravité du profil de gain dans la bande de transmission (7, 8) après la pré-accentuation et avant l'égalisation se situant, à la limite supérieure de la gamme de fréquences de la bande de transmission.

6. Procédé selon l'une des revendications précédentes, le maximum du profil de gain après la pré-accentuation et avant l'égalisation se situant à la limite ou en dehors de la bande de transmission (7, 8).

7. Procédé selon l'une des revendications précédentes, le profil de gain étant accentué dans la gamme des hautes fréquences de la bande de transmission d'au moins 5dB (10dB) par rapport à la gamme des basses fréquences de la bande de transmission (7, 8).

8. Procédé selon l'une des revendications précédentes, plusieurs pompes (38, pompe 1, pompe 2) de fréquences de pompage différentes étant utilisées pour l'amplification Raman, et les profils de gain des plusieurs pompes (38, pompe 1, pompe 2) se superposant pour former un profil global de gain et le profil global de gain de l'amplification Raman étant pré-accentué à l'intérieur de la bande de transmission au moyen d'un décalage de la fréquence de pompage d'une pompe ou des fréquences de pompage de plusieurs des pompes par rapport à un profil global de gain sans distorsion (VP3).

9. Procédé selon l'une des revendications précédentes, la pré-accentuation et l'égalisation étant ajustées l'une à l'autre de manière telle que le maximum d'amplification se situe après la pré-accentuation du profil de gain suivie de l'égalisation dans la bande de transmission (7, 8).

10. Procédé selon l'une des revendications précédentes, les signaux optiques (9) étant amplifiés avant l'amplification Raman au moyen d'un amplificateur d'entrée (14).

11. Procédé selon l'une des revendications précédentes, l'égalisation s'effectuant au moyen d'un filtre optique (40) après l'amplification Raman.

12. Procédé selon l'une des revendications précédentes, des lasers étant utilisés comme pompes (38, pompe 1, pompe 2) et les lasers étant injectés dans le guide d'onde (16) dans le sens inverse de transmission du signal.

13. Procédé selon l'une des revendications précédentes, le système de transmission (11) comprenant plusieurs lignes de transmission (16), et l'amplification pré-accentuée et l'égalisation compensatrice s'effectuant respectivement à la fin de chaque ligne de transmission (16) au moyen d'un ensemble pompe-égaliseur (38, 40).

14. Système de communication optique (11) à amplification Raman, notamment système de communication WDM, comprenant
un émetteur (12), un récepteur (20) et un guide d'onde optique (16) reliant le récepteur (12) à l'émetteur (20), de manière à permettre la transmission de signaux optiques (9) à l'intérieur d'une bande de transmission (7, 8) entre l'émetteur (12) et le récepteur (20) par l'intermédiaire du guide d'onde (16),
au moins une pompe Raman (38) d'une fréquence de pompage prédéterminée sur le guide d'onde (16) pour l'amplification Raman des signaux optiques (9),
**caractérisé en ce que**
la fréquence de pompage prédéterminée est choisie de manière telle que le profil de gain de l'amplification Raman à l'intérieur de la bande de transmission (7, 8) soit pré-accentué par rapport à un profil de gain sans distorsion (VP3) de manière que le profil de gain pré-accentué (32) se rapproche d'une consigne pré-accentuée prédéterminée (24) (pré-emphase),
et **en ce que** des moyens d'égalisation (40) du profil de gain pré-accentué (32) sont compris et égalisent le profil de gain pré-accentué (32) de manière à compenser à nouveau la pré-accentuation du profil de gain pré-accentué (32) (dé-emphase).

**15.** Système de communication (11) selon la revendication 14, le premier profil de gain (VP3) étant défini par au moins une première fréquence de pompage, et la fréquence de pompage prédéterminée de la pompe (38) étant une deuxième fréquence de pompage, et la deuxième fréquence de pompage étant décalée par rapport à la première fréquence de pompage pour obtenir la pré-accentuation du profil de gain.

**16.** Système de communication (11) selon la revendication 15, la deuxième fréquence de pompage de la pompe pour le profil de gain pré-accentué étant décalée par rapport à la première fréquence de pompage pour le profil de gain sans distorsion vers une fréquence plus haute ou en l'éloignant de la bande de transmission.

**17.** Système de communication (11) selon l'une des revendications précédentes, le profil de gain pré-accentué étant pré-accentué dans la gamme des hautes fréquences de la bande de transmission (7, 8).

**18.** Système de communication (11) selon l'une des revendications précédentes, le centre de gravité du profil de gain dans la bande de transmission après la pré-accentuation et avant l'égalisation se situant à la limite supérieure de la gamme de fréquences de la bande de transmission (7, 8).

**19.** Système de communication (11) selon l'une des revendications précédentes, le maximum du profil de gain après la pré-accentuation et avant l'égalisation se situant à la limite ou en dehors de la bande de transmission (7, 8).

**20.** Système de communication (11) selon l'une des revendications précédentes, le profil de gain étant accentué dans la gamme des hautes fréquences de la bande de transmission (7, 8) d'au moins 5 dB par rapport à la gamme des basses fréquences de la bande de transmission.

**21.** Système de communication (11) selon l'une des revendications précédentes, plusieurs pompes (38) de fréquences de pompage différentes pour l'amplification Raman étant comprises, et les profils de gain des plusieurs pompes (38) se superposant pour former un profil global de gain, et le profil global de gain de l'amplification Raman étant pré-accentué à l'intérieur de la bande de transmission (7, 8) au moyen d'un décalage de la fréquence de pompage d'une des pompes (38) ou des fréquences de pompage de plusieurs des pompes (38) par rapport à un profil global de gain sans distorsion (VP3).

**22.** Système de communication (11) selon l'une des revendications précédentes, un amplificateur d'entrée (14) en amont du guide d'onde (16) étant compris.

**23.** Système de communication (11) selon l'une des revendications précédentes, le moyen d'égalisation (40) du profil de gain pré-accentué comprenant un filtre optique compensant au moins partiellement la pré-accentuation du profil de gain pré-accentué (32).

**24.** Système de communication (11) selon l'une des revendications précédentes, le profil de gain pré-accentué (32) et les moyens d'égalisation du profil de gain pré-accentué (32) étant ajustés l'un à l'autre de manière telle que le maximum d'amplification se situe dans la bande de transmission (7, 8) après la pré-accentuation du profil de gain suivie de l'égalisation.

**25.** Système de communication (11) selon l'une des revendications précédentes, les pompes (38) comprenant des lasers, et les lasers étant injectés dans le guide d'onde (16) dans le sens inverse de transmission du signal.

**26.** Système de communication (11) selon l'une des revendications précédentes, comprenant plusieurs lignes de transmission (16), un ensemble pompe-égaliseur (38, 40) étant prévu respectivement à la fin de chaque ligne de transmission (16), chaque ensemble pompe-égaliseur (38, 40) comportant chacun une pompe (38) pour l'amplification pré-accentuée et un moyen pour l'égalisation compensatrice (40).

**27.** Procédé de mise en place d'un système de transmission WDM (11) à amplification Raman permettant la transmission de signaux optiques (9) à l'intérieur d'une bande de transmission (7, 8) par l'intermédiaire d'un guide d'onde optique (16) entre un émetteur (12) et un récepteur (20), une consigne (6) étant définie pour un gain moyen de l'amplification Raman à l'intérieur de la bande de transmission (7, 8), la consigne (6) étant en corrélation avec une ou plusieurs des premières fréquences de pompage, et un profil de gain sans distorsion (VP3) étant défini au moyen de l'une ou plusieurs des premières fréquences de pompage, **caractérisé par** les étapes :

détermination d'une ou plusieurs deuxièmes fréquences de pompage pour un profil de gain pré-accentué (32) par rapport au profil de gain sans distorsion (VP3),

mise en place d'une ou plusieurs pompes (38) avec la deuxième fréquence de pompage ou les deuxièmes fréquences de pompage pour l'amplification Raman des signaux à transmettre (9),

mise en place de moyens d'égalisation (40) du profil de gain pré-accentué (32) afin de générer un profil de gain égalisé (32') au moyen duquel le système de transmission (11) fonctionnera ensuite.

Fig. 1

Fig. 2

## Fig. 3

## Fig. 4

## Fig. 5

## Fig. 6

## Fig. 7

## Fig. 8

Fig. 9

Fig. 10

Fig. 11

**EP 1 897 253 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020191277 A1